(19) Europäisches Patentamt

European Patent Office

Office européen des brevets

(11) **EP 1 496 461 B1**

(12) **FASCICULE DE BREVET EUROPEEN**

(45) Date de publication et mention
de la délivrance du brevet:
**18.01.2006 Bulletin 2006/03**

(51) Int Cl.:
*G06Q 10/00* *(2006.01)*      *G08G 5/00* *(2006.01)*

(21) Numéro de dépôt: **04291510.8**

(22) Date de dépôt: **16.06.2004**

(54) **Procédé et dispositif de génération d'un plan de vol pour un vol tactique d'un aéronef**

Verfahren und Vorrichtung zur Erzeugung eines Flugplans für einen taktischen Flug eines Flugzeugs

Method and apparatus for generating a flight plan for a tactical flight of an aircraft

(84) Etats contractants désignés:
**AT BE BG CH CY CZ DE DK EE ES FI FR GB GR HU IE IT LI LU MC NL PL PT RO SE SI SK TR**

(30) Priorité: **07.07.2003 FR 0308270**

(43) Date de publication de la demande:
**12.01.2005 Bulletin 2005/02**

(73) Titulaire: **AIRBUS France**
**31060 Toulouse (FR)**

(72) Inventeur: **Berard, Jérémy**
**31150 Fenouillet (FR)**

(74) Mandataire: **Bonnetat, Christian**
**CABINET BONNETAT**
**29, rue de St. Pétersbourg**
**75008 Paris (FR)**

(56) Documents cités:
**US-A- 5 121 325**      **US-A- 5 574 647**
**US-A- 5 890 101**      **US-A- 6 134 500**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un procédé et un dispositif de génération d'un plan de vol pour un vol tactique d'un aéronef.

Les aéronefs modernes disposent d'un système de gestion du vol qui fournit un plan de vol constitué de points de passage, reliés entre eux. A chaque point de passage, jusqu'à l'aéroport de destination, le système de gestion du vol fournit des prédictions : heure de passage, vitesse, altitude, carburant restant à bord. De plus le système de gestion du vol propose une optimisation du plan de vol : altitude de croisière optimale, vitesse optimale pour chaque phase de vol.

On sait qu'un plan de vol civil suivi par exemple par un avion de transport civil, comporte un aéroport de départ et un aéroport de destination, plus éventuellement un aéroport de déroutement. En aviation civile, la charge embarquée à bord de l'aéronef (passagers, fret) ne varie pas au cours d'un même vol. De plus, les variations de masse de carburant sont dues à la consommation des moteurs et sont donc prévisibles tout au long du vol.

Un procédé de génération d'un tel plan de vol est connu p.ex. du document US 613 4500.

En revanche, un plan de vol tactique, c'est-à-dire un plan de vol destiné à un vol tactique, doit tenir compte d'évènements tactiques susceptibles de modifier les prédictions. Plus précisément, pour un aéronef impliqué dans un vol tactique, quatre types d'évènements tactiques peuvent faire varier la charge transportée, ou faire varier la quantité de carburant à bord (autrement que par la consommation normale de carburant), au cours du vol :

- une diminution de la charge transportée, lors d'un largage aérien ou d'un déchargement pendant une étape tactique qui correspond à un atterrissage sur un terrain intermédiaire à des fins tactiques (attente, chargement, déchargement, ...), suivi d'un décollage vers la destination, ou vers une autre étape tactique ;
- une augmentation de la charge transportée, lors d'un chargement pendant une étape tactique ;
- une diminution du carburant à bord (non due à la consommation propre de l'aéronef), lors d'un ravitaillement en vol en tant qu'aéronef ravitailleur ; et
- une augmentation du carburant à bord, lors d'un ravitaillement en vol en tant qu'aéronef ravitaillé.

Les systèmes de gestion du vol usuels ne prennent pas en compte ces évènements tactiques dans les prédictions du plan de vol avant que ces événements ne se soient effectivement produits. De même, on ne dispose pas d'une optimisation du plan de vol au-delà du point où un évènement tactique va avoir lieu, avant que cet évènement n'ait effectivement eu lieu.

Lorsqu'un évènement tactique a effectivement eu lieu, ou a eu lieu partiellement (ravitaillement ou largage partiel), les prédictions sont actualisées avec les nouveaux paramètres de l'aéronef. En effet, lorsque le changement est intervenu, les paramètres de masse de l'aéronef sont modifiés par l'équipage afin que les prédictions soient recalculées en fonction de la situation courante.

Les systèmes de gestion du vol usuels ne sont donc pas en mesure d'engendrer un plan de vol tactique, c'est-à-dire d'engendrer lors de la préparation du vol un plan de vol tenant compte d'évènements tactiques qui vont survenir au cours du vol.

La présente invention a pour objet de remédier à ces inconvénients. Elle concerne un procédé de génération d'un plan de vol tactique d'un aéronef comme défini dans la revendication 1.

A cet effet, selon l'invention, ledit procédé selon lequel :

a) on définit des données d'entrée comportant au moins des données de masse et de chargement initiaux de l'aéronef, des données météorologiques, des points de passage du plan de vol et au moins un critère d'optimisation ; et

b) on détermine, à l'aide desdites données d'entrée, en mettant en oeuvre une fonction de prédiction et une fonction d'optimisation, un profil de vol dudit plan de vol comprenant, pour chaque point de passage du plan de vol, une pluralité d'informations prédictives et, entre deux points de passage successifs du plan de vol, des paramètres optimisés,

est remarquable en ce que :

α) on sélectionne des évènements tactiques dudit vol tactique, à prendre en compte ;
β) on détermine, pour chaque évènement tactique ainsi sélectionné, au moins un paramètre qui est modifié par cet évènement tactique à un point de variation particulier du plan de vol, ainsi que la variation dudit paramètre, correspondant à cette modification ; et
δ) on utilise à l'étape b), pour déterminer ledit profil de vol, chaque variation de paramètre ainsi déterminée, prise en compte au point de variation correspondant.

Ainsi, grâce à l'invention, on engendre un plan de vol tactique qui tient compte d'évènements tactiques du type précité, qui vont survenir au cours du vol tactique considéré.

De façon avantageuse, à l'étape α) :

α1) on définit des évènements tactiques planifiés ; et

α2) on sélectionne, parmi tous les évènements tactiques planifiés ainsi définis, ceux qui sont à prendre en compte.

Selon l'invention :

- ledit critère d'optimisation définit un rapport entre la consommation de carburant de l'aéronef et le temps de vol ; et/ou
- lesdites informations prédictives comportent, pour chaque point de passage, au moins l'heure de passage, la vitesse de passage, l'altitude de passage et la masse de carburant restant à bord de l'aéronef ; et/ou
- lesdits paramètres optimisés comportent au moins la vitesse optimale et le cas échéant l'altitude de croisière optimale, entre deux points de passage successifs.

Selon l'invention, lesdits événements tactiques comportent au moins l'un des évènements suivants : un largage en vol, un ravitaillement en vol et une étape tactique comprenant un atterrissage.

Avantageusement, ledit paramètre qui est modifié, correspond à l'un des paramètres suivants :

- la masse de la charge transportée par l'aéronef ;
- la masse de carburant à bord de l'aéronef ;
- la masse à vide de l'aéronef ;
- l'heure de passage ;
- la position du centre de gravité de l'aéronef ; et
- la configuration aérodynamique de l'aéronef.

Dans un mode de réalisation préféré, ledit point de variation particulier correspond :

- au point de fin de largage, pour un largage ;
- au point de fin de ravitaillement, pour un ravitaillement réalisé par l'aéronef en tant que ravitailleur ;
- au point de début de ravitaillement, pour un ravitaillement réalisé par l'aéronef en tant que ravitaillé ; et
- au point de début de la piste d'atterrissage, pour une étape tactique.

En outre, selon l'invention, à l'étape β), on détermine, comme variation de paramètre :

- pour un largage, la diminution de la masse de la charge transportée par l'aéronef ;
- pour un ravitaillement réalisé par l'aéronef en tant que ravitailleur, la diminution de la masse de carburant à bord de l'aéronef ;
- pour un ravitaillement réalisé par l'aéronef en tant que ravitaillé, l'augmentation de la masse de carburant à bord de l'aéronef ; et
- pour une étape tactique, la variation éventuelle de la masse de la charge transportée, la variation éventuelle de la masse de carburant à bord de l'aéronef et le temps d'arrêt au sol.

Dans le cadre de la présente invention, à l'étape δ), on utilise directement la variation dudit paramètre ou une valeur estimée dudit paramètre à la fin de l'évènement tactique correspondant, qui tient compte de ladite variation dudit paramètre.

La présente invention concerne également un dispositif de génération d'un plan de vol pour un vol tactique d'un aéronef comme défini dans la revendication 10.

Selon l'invention, ledit dispositif du type comportant :

- des premiers moyens d'entrée permettant à un opérateur d'entrer des données d'entrée comportant au moins des données de masse et de chargement initiaux de l'aéronef, des données météorologiques, des points de passage du plan de vol et au moins un critère d'optimisation ;
- une unité centrale pour déterminer, à l'aide desdites données d'entrée, en mettant en oeuvre une fonction de prédiction et une fonction d'optimisation, un profil de vol dudit plan de vol comprenant, pour chaque point de passage du plan de vol, une pluralité d'informations prédictives et, entre deux points de passage successifs du plan de vol, des paramètres optimisés ; et
- des moyens d'affichage pour présenter, sur un écran de visualisation, le profil de vol déterminé par ladite unité

centrale,

est remarquable en ce que :

- ledit dispositif comporte, de plus, des seconds moyens d'entrée permettant à un opérateur d'entrer, pour chaque évènement tactique du vol tactique, la variation d'au moins un paramètre qui est modifié par cet évènement tactique à un point de variation particulier du plan de vol ; et
- ladite unité centrale utilise, pour déterminer ledit profil de vol, chaque variation de paramètre qui a été entrée à l'aide desdits seconds moyens d'entrée et qui est prise en compte au point de variation correspondant.

Par ailleurs, dans un mode de réalisation particulier :

- ledit dispositif comporte, de plus, au moins une base de données contenant des variations de paramètre associées à des évènements tactiques ;
- lesdits seconds moyens d'entrée permettent à un opérateur d'entrer des évènements tactiques ; et
- ladite unité centrale utilise automatiquement les variations de paramètre contenues dans ladite base de données et associées à un évènement tactique particulier, lorsque l'opérateur entre cet évènement tactique à l'aide desdits seconds moyens d'entrée, pour déterminer ledit profil de vol.

Les figures du dessin annexé feront bien comprendre comment l'invention peut être réalisée. Sur ces figures, des références identiques désignent des éléments semblables.

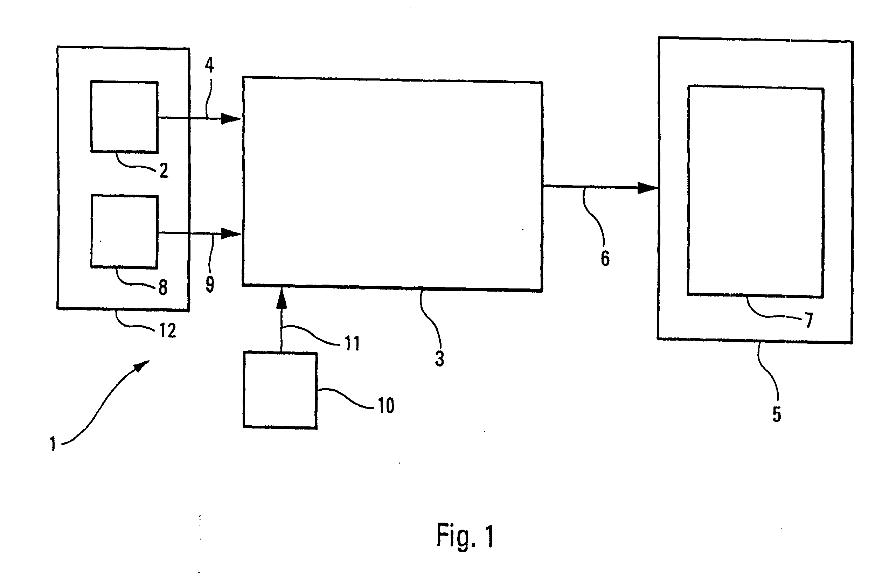

La figure 1 est le schéma synoptique d'un dispositif conforme à l'invention.
La figure 2 illustre schématiquement un profil de vol d'un plan de vol.
La figure 3 montre schématiquement une page susceptible d'être présentée à un opérateur et permettant de bien expliquer la présente invention.
Le dispositif 1 conforme à l'invention et représenté schématiquement sur la figure 1 est destiné à la génération d'un plan de vol pour un vol tactique d'un aéronef.
On sait qu'au cours d'un vol tactique, différents types d'évènements tactiques peuvent faire varier la charge transportée, ou faire varier la quantité de carburant à bord de l'aéronef (autrement que par !a consommation normale de carburant), au cours du vol :

- une diminution de la charge transportée, lors d'un largage aérien ou d'un déchargement pendant une étape tactique. Une étape tactique correspond à un atterrissage sur un terrain intermédiaire à des fins tactiques (attente, chargement, déchargement, ...), suivi d'un décollage vers la destination, ou vers une autre étape tactique ;
- une augmentation de la charge transportée lors d'un chargement pendant une étape tactique ;
- une diminution du carburant à bord (non due à la consommation propre de l'aéronef), lors d'un ravitaillement en vol en tant qu'aéronef ravitailleur ; et
- une augmentation du carburant à bord, lors d'un ravitaillement en vol en tant qu'aéronef ravitaillé.

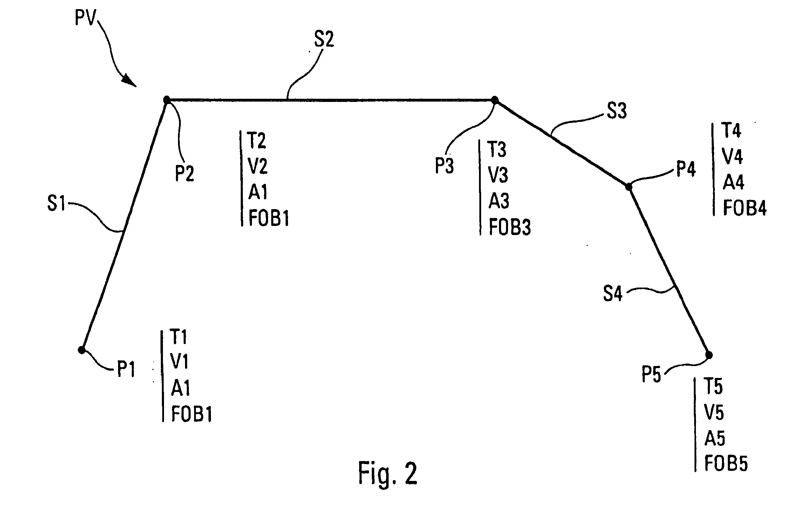

De façon usuelle, un plan de vol comprend, comme illustré sur la figure 2, pour le profil de vol PV (c'est-à-dire la représentation selon un plan vertical) du plan de vol, notamment :

- des points de passage P1 à P5 ;
- des informations relatives auxdits points de passage P1 à P5, telles que le temps ou heure de passage T1 à T5, la vitesse de passage V1 à V5, l'altitude de passage A1 à A5, et la masse de carburant FOB1 à FOB5 restant à bord de l'aéronef ; et
- des segments S1 à S4 reliant lesdits points de passage P1 à P5.

Un plan de vol tactique correspond donc à un plan de vol qui prend en compte des évènements tactiques du type précité, existant lors d'un vol tactique (ravitaillement, largage, étape tactique).
Ledit dispositif 1 est du type comportant :

- des moyens d'entrée 2 permettant à un opérateur d'entrer des données d'entrée comportant au moins des données de masse et de chargement initiaux de l'aéronef, des données météorologiques, des points de passage P1 à P5 du plan de vol et au moins un critère d'optimisation ;
- une unité centrale 3 qui est reliée par une liaison 4 auxdits moyens d'entrée 2, pour déterminer, à l'aide desdites données d'entrée, en mettant en oeuvre une fonction de prédiction et une fonction d'optimisation usuelles, un profil de vol PV dudit plan de vol comprenant, pour chaque point de passage P1 à P5 du plan de vol, une pluralité d'informations prédictives et, entre deux points de passage P1 à P5 successifs du plan de vol, des paramètres optimisés ; et

- des moyens d'affichage 5 qui sont reliés par une liaison 6 à ladite unité centrale 3, pour présenter sur un écran de visualisation 7, le profil de vol PV déterminé par ladite unité centrale 3.

Selon l'invention, pour pouvoir engendrer un plan de vol tactique du type précité :

- ledit dispositif 1 comporte, de plus, des moyens d'entrée 8 qui sont reliés par une liaison 9 à l'unité centrale 3 et qui permettent à un opérateur d'entrer, pour chaque évènement tactique du vol tactique pris en compte, la variation $\Delta X$ d'au moins un paramètre qui est modifié par cet événement tactique à un point de variation particulier pi du plan de vol ; et
- ladite unité centrale 3 utilise, pour déterminer ledit profil de vol PV, chaque variation $\Delta X$ de paramètre X, qui a été entrée à l'aide desdits moyens d'entrée 8, et la prend en compte au point de variation pi correspondant.

De façon usuelle, les prédictions mises en oeuvre par l'unité centrale 3 sont basées sur les conditions initiales spécifiées par l'équipage, la géométrie du plan de vol et des modèles de performance prenant en compte des caractéristiques de l'aéronef (moteurs, caractéristiques aérodynamiques, performances). Les modèles de performance, utilisés pour les prédictions et également pour l'optimisation, sont élaborés à partir de maquettes en soufflerie et sont corrigés après des essais en vol. Ils reflètent les performances des moteurs, les caractéristiques aérodynamiques de l'aéronef et ses propres performances. Ces modèles sont, par exemple, stockés dans un système de gestion du vol usuel (non représenté) qui est relié à l'unité centrale 3, sous forme de tables de performance, propres à chaque type d'aéronef. Ces tables permettent de déterminer, en fonction de paramètres d'entrée telles que la masse de l'aéronef, l'altitude ..., les paramètres reflétant les performances dudit aéronef, qui permettent d'optimiser le profil de vol PV et de calculer des prédictions.

En outre, selon l'invention :

- ledit critère d'optimisation définit un rapport (choisi par l'équipage) entre la consommation de carburant de l'aéronef et le temps de vol correspondant ;
- lesdites informations prédictives comportent, pour chaque point de passage P1 à P5, au moins l'heure de passage T1 à T5, la vitesse de passage V1 à V5, l'altitude de passage A1 à A5 et la masse de carburant FOB1 à FOB5 restant à bord de l'aéronef ;
- lesdits paramètres optimisés comportent au moins la vitesse optimale et le cas échéant l'altitude de croisière optimale sur lesdits segments S1 à S4, entre deux points de passage successifs ; et
- lesdits évènements tactiques possibles d'un vol tactique comportent au moins l'un des évènements suivants : un largage en vol, un ravitaillement en vol et une étape tactique comprenant un atterrissage.

On utilise ci-après les abréviations suivantes.

| Abréviations | Significations |
|---|---|
| FOB ("Fuel On Board") | Masse de carburant à bord de l'aéronef |
| $\Delta$FOB | Variation de la masse de carburant à bord de l'aéronef |
| FOBpi | Estimation de la masse de carburant à bord de l'aéronef au point pi |
| FOBpiF | Estimation de la masse de carburant à bord de l'aéronef au point pi, cette estimation prenant en compte l'événement tactique planifié au point pi |
| $\Delta$FOBpi | Variation de la masse de carburant à bord de l'aéronef résultant de l'évènement tactique au point pi |
| GW ("Gross Weight") | Masse totale de l'aéronef |
| GWpi | Estimation de la masse totale de l'aéronef au point pi |
| GWpiF | Estimation de la masse totale de l'aéronef au point pi, cette estimation prenant en compte l'évènement tactique planifié au point pi |
| OWE ("Operational Weight Empty") | Masse à vide de l'aéronef |
| PW ("Payload Weight") | Masse de la charge transportée par l'aéronef |

Suite de tableau

| Abréviations | Significations |
| --- | --- |
| ΔPW | Variation de la masse de la charge transportée par l'aéronef |
| PWpi | Estimation de la masse de la charge transportée par l'aéronef au point pi |
| PWpiF | Estimation de la masse de la charge transportée par l'aéronef au point pi, cette estimation prenant en compte l'événement tactique planifié au point pi |
| ΔPWpi | Variation de la masse de la charge transportée par l'aéronef au point pi résultant de l'évènement tactique au point pi |
| ΔT | Temps passé au sol par l'aéronef |
| Tpi | Estimation de l'heure de passage au point pi |
| TpF | Estimation de l'heure de passage au point pi, cette estimation prenant en compte l'évènement tactique planifié au point pi |
| ΔTpi | Temps passé au sol par l'aéronef pendant une étape tactique au point pi |
| X | Paramètre quelconque |
| Xpi | Estimation de la valeur du paramètre X au point pi |
| XpiF | Estimation de la valeur du paramètre X au point pi, cette estimation prenant en compte l'événement tactique planifié au point pi |
| ΔXpi | Variation de la valeur du paramètre X au point pi résultant de l'évènement tactique au point pi |
| ZFW ("Zero Fuel Weight") | Masse de l'aéronef sans carburant |
| ZFWpi | Estimation de la masse de l'aéronef sans carburant au point pi |
| ZFWpiF | Estimation de la masse de l'aéronef sans carburant au point pi, cette estimation prenant en compte l'évènement tactique planifié au point pi |

Le dispositif 1 permet à l'équipage de spécifier, selon la planification de la mission de l'aéronef, telle que définie au départ ou en vol :

- pour un largage, la diminution de la masse de la charge transportée ΔPW (<0), due au largage (de troupes aéroportées ou de matériel) ;
- pour un ravitaillement en tant que ravitailleur, la diminution de la masse de carburant à bord ΔFOB (<0), due au transfert de carburant vers un aéronef ravitaillé ;
- pour un ravitaillement en tant que ravitaillé, l'augmentation de la masse de carburant à bord ΔFOB (>0), due au transfert de carburant depuis un aéronef ravitailleur ; et
- pour une étape tactique, la variation de la masse transportée ΔPW ( < O ou > 0), due au chargement ou au déchargement de troupes ou de matériel, la variation de la masse de carburant à bord ΔFOB (< O ou > 0), due à des opérations de transfert de carburant au sol, ainsi que le temps qui sera passé au sol avant de redécoller ΔT (> 0).

Plusieurs évènements tactiques peuvent être planifiés au cours du vol. L'équipage spécifie donc les différents paramètres X à prendre en compte pour chacun de ces évènements tactiques.

Chaque évènement tactique est lié à un point de variation pi du plan de vol, par exemple :

- le point de fin de largage, pour le largage ;
- le point de fin de ravitaillement, si le ravitaillement est conduit par l'aéronef en tant qu'aéronef ravitailleur. On considère ainsi qu'on garde la totalité du carburant à bord de l'aéronef jusqu'à la fin du transfert de carburant, ce qui permet de ne pas sous-estimer la quantité de carburant à bord pendant la durée du ravitaillement ;
- le point de début de ravitaillement, si le ravitaillement est effectué par l'aéronef en tant qu'aéronef ravitaillé. On considère ainsi que l'on reçoit la totalité du carburant dès le début du ravitaillement, ce qui permet de ne pas sous-estimer la quantité de carburant à bord pendant la durée du ravitaillement ; et
- le point de début de la piste d'atterrissage, dans le cas d'une étape tactique.

On considère ainsi, pour les prédictions, que le changement a lieu instantanément au point de variation pi considéré.

Il faut noter, dans le cas d'un aéronef ravitailleur, qu'une variation de masse de carburant peut se traduire par :

- une variation de la masse de carburant utilisable par l'aéronef pour sa propre consommation, dans le cas où le carburant qui est fourni à un aéronef ravitaillé provient des mêmes réservoirs que ceux utilisés par ledit aéronef ravitailleur pour approvisionner ses moteurs ; ou
- une simple variation de la charge transportée, dans le cas où le carburant qui est fourni à un aéronef ravitaillé n'est pas utilisable par ledit aéronef ravitailleur pour sa propre consommation.

Dans ce dernier cas, on se ramène à une diminution de la charge transportée, comme pour un largage. Dans la suite de la description, on considérera qu'une variation de masse de carburant dans le cas d'un aéronef ravitailleur correspond à une variation de la masse de carburant qui est consommable par cet aéronef.

On notera en outre que :

- si on ajoute la masse de la charge transportée PWpi qui varie au cours du vol pour un aéronef impliqué dans un vol tactique à la masse à vide de l'aéronef qui est normalement constante au cours du vol OWE, on obtient la masse sans carburant de l'aéronef ZFWpi au point pi :

$$ZFWpi = OWE + PWpi$$

- si on ajoute cette masse sans carburant ZFWpi à la masse de carburant à bord FOBpi, on obtient la masse totale GWpi de l'aéronef au point pi :

$$GWpi = ZFWpi + FOBpi$$

On décrit à présent différents exemples permettant de bien illustrer la mise en oeuvre de la présente invention :

A/ Si dans le cadre d'un vol tactique, on considère un point de variation p1, auquel on a planifié un ravitaillement, on applique :

- 

$$FOBp1F = FOBp1 + \Delta FOBp1$$

avec FOBp1 F, la prédiction de la masse de carburant à bord en p 1, prenant en compte le ravitaillement ; et

- 

$$GWp1F = ZFWp1 + FOBp1F$$

avec GWp1F, la prédiction de la masse totale de l'aéronef en p1, prenant en compte le ravitaillement.
Ainsi, en prenant en compte GWp1F et FOBp1 F dans les calculs de prédictions à partir du point p1, on prend en compte la variation de la masse de la charge transportée et la variation de la masse de carburant à bord, dues au ravitaillement en p1;
B/ Si dans le cadre d'un vol tactique, on considère un point de variation p2, auquel on a planifié un largage, on applique :

- 

$$PWp2F = PWp2 + \Delta PWp2$$

avec PWp2F, la prédiction de la masse de la charge transportée en p2, prenant en compte le largage ; et

- 

$$GWp2F = FOBp2 + OWE + PWp2F$$

avec GWp2F, la prédiction de la masse totale de l'aéronef en p2, prenant en compte le largage.
Ainsi, en prenant en compte GWp2F dans les calculs de prédictions à partir du point p2, on prend en compte la variation de la masse de la charge transportée, due au largage en p2 ;

C/ Si dans le cadre d'un vol tactique, on considère un point de variation p3, auquel on a planifié une étape tactique, on applique :

- 

$$PWp3F = PWp3 + \Delta PWp3$$

avec PWp3F, la prédiction de la masse de la charge transportée en p3, prenant en compte le chargement ou déchargement ;

- 

$$FOBp3F = FOBp3 + \Delta FOBp3$$

avec FOBp3F, la prédiction de la masse de carburant à bord en p3, prenant en compte le transfert de carburant ;

$$GWp3F = FOBp3F + OWE + PWp3F$$

avec GWp3F, la prédiction de la masse totale de l'aéronef en p3, prenant en compte le chargement (ou déchargement) et le transfert de carburant ; et

- 

$$Tp3F = Tp3 + \Delta Tp3$$

avec Tp3F, la prédiction de l'heure de passage en p3 (heure de départ prévue), prenant en compte !e temps d'immobilisation en p3 dû à la durée de l'étape tactique.

Ainsi, en prenant en compte GWp3F, FOBp3F et Tp3F dans les calculs des prédictions à partir du point p3, on prend en compte la variation de la masse de la charge transportée, la variation de la masse de carburant à bord, et la durée d'immobilisation en p3, dues à l'étape tactique en p3.

On peut généraliser les principes précités conformes à l'invention. En effet, si dans le cadre d'un vol tactique, on considère un point de variation pi, auquel on a planifié un évènement tactique faisant varier la masse de la charge transportée et/ou la masse de carburant à bord, et/ou impliquant l'immobilisation de l'aéronef pendant une certaine durée en ce point pi, on applique le ou les paramètres suivants correspondant audit événement tactique :

- 

$$PWpiF = PWpi + \Delta PWpi$$

avec PWpiF, la prédiction de la masse de la charge transportée en pi, prenant en compte la variation de la masse de la charge transportée ($\Delta PWpi$) audit point pi ;

- 

$$FOBpiF = FOBpi + \Delta FOBpi$$

avec FOBpiF, la prédiction de la massé de carburant à bord en pi, prenant en compte le transfert de carburant ($\Delta FOBpi$) audit point pi ;

- 

$$GWpiF = FOBpiF + OWE + PWpiF$$

avec GWpiF, la prédiction de la masse totale de l'aéronef en pi, prenant en compte la variation de la masse de la charge transportée ($\Delta PWpi$) audit point pi et le transfert de carburant ($\Delta FOBpi$) audit point pi ;

- 

$$TpiF = Tpi + \Delta Tpi$$

avec TpiF, la prédiction de l'heure de passage en pi (heure de départ du point pi), prenant en compte le temps d'immobilisation en pi ; et

- en généralisant,

$$XpiF = Xpi + \Delta Xpi$$

avec XpiF, la prédiction de la valeur d'un paramètre X quelconque en pi, prenant en compte la variation planifiée de ce paramètre en pi.

Ainsi, en prenant en compte GWpiF, FOBpiF, TpiF, et XpiF dans les calculs des prédictions à partir du point pi, on prend en compte la variation de la masse de la charge transportée, la variation de la masse de carburant à bord, la durée d'immobilisation en pi, et toute autre variation d'un paramètre X quelconque, dues à l'évènement tactique planifié audit point pi.

Selon l'invention, ledit paramètre X peut être le centre de gravité de l'aéronef, dans une utilisation du dispositif 1 où les prédictions sont calculées en prenant en compte les variations du centre de gravité.

Ledit paramètre X peut également représenter la masse à vide de l'aéronef (OWE), dans le cas d'un aéronef qui largue des éléments en vol de manière planifiée (armes, réservoirs additionnels...), ces éléments faisant initialement partie de l'aéronef sans son chargement et sans son carburant. Dans ce dernier cas, on peut étendre l'utilisation de l'invention pour prendre en compte les variations de traînée aérodynamique de l'aéronef, dues à la disparition de ces éléments extérieurs, en considérant une mise en oeuvre de l'invention faisant intervenir un facteur de traînée, qui permet d'ajuster le résultat des calculs de prédictions en fonction de la configuration aérodynamique de l'aéronef. Grâce à l'invention, la variation du facteur de traînée peut être prise en compte dès la planification du vol. Il en est de même de la variation du centre de gravité de l'aéronef.

Selon l'invention, quel que soit le paramètre X, un opérateur peut à l'aide des moyens 8, soit entrer directement la variation $\Delta$Xpi de ce paramètre X en pi, soit entrer la valeur XpiF dudit paramètre X après variation en pi. Les deux modes de réalisation sont équivalents, puisque $\Delta$Xpi et XpiF sont liés par la relation suivante :

$$XpiF = Xpi + \Delta Xpi.$$

Par ailleurs, dans un mode de réalisation particulier :

- ledit dispositif 1 comporte, de plus, au moins une base de données 10 reliée par une liaison 11 à l'unité centrale 3 et contenant des variations de paramètre $\Delta$X associées à des évènements tactiques ;
- lesdits moyens d'entrée 8 sont formés de manière à permettre à un opérateur d'entrer des évènements tactiques ; et
- ladite unité centrale 3 utilise automatiquement (pour déterminer le profil de vol PV) les variations de paramètre $\Delta$X contenues dans ladite base de données 10 et associées à un évènement tactique particulier, lorsque l'opérateur entre cet évènement tactique à l'aide desdits moyens d'entrée 8.

Les moyens d'entrée 2 et 8 peuvent être regroupés dans une seule unité d'entrée 12. Cette unité d'entrée 12 peut, par exemple, coopérer avec les moyens d'affichage 5 pour former une interface.

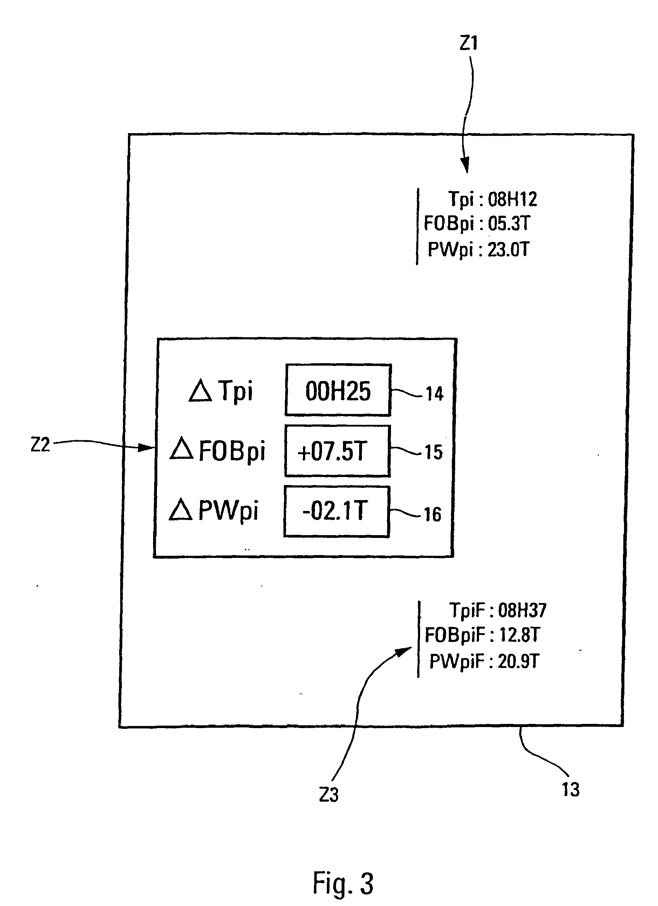

Dans un mode de réalisation particulier, pour permettre à un opérateur d'entrer des variations de paramètre ou tout au moins pour faciliter une telle entrée, le dispositif 1 peut afficher, par exemple sur l'écran de visualisation 7 ou sur un autre écran spécifique, une page telle que la page 13 représentée sur la figure 3.

Cette page 13 comporte trois zones Z1, Z2 et Z3 :

- une zone Z1, dans laquelle le dispositif 1 affiche automatiquement des paramètres prédictifs pour un point pi du plan de vol PV, par exemple les paramètres Tpi (valant O8H12 sur l'exemple de la figure 3), FOBpi (05,3 tonnes [T]) et PWpi (23,0 tonnes) ;
- une zone Z2, permettant à un opérateur d'entrer des variations de paramètres particuliers dans des cases spécifiques 14, 15 et 16, en particulier les variations de paramètre $\Delta$Tpi (OOH25), $\Delta$FOBpi (+07,5 tonnes) et $\Delta$PWpi (-02,1 tonnes) ; et
- une zone Z3, dans laquelle le dispositif 1 affiche automatiquement les nouveaux paramètres TpiF (08H37), FOBpiF (12,8 tonnes) et PWpiF (20,9 tonnes) pris en compte par l'unité centrale 3 pour élaborer le plan de vol tactique.

L'affichage est bien entendu adapté à l'évènement tactique considéré audit point pi. Ainsi, à titre d'exemple, pour un largage, seule la case 16 ($\Delta$PWpi) est affichée et accessible à un opérateur pour entrer la valeur appropriée.

Le dispositif 1 permet, par ailleurs, d'adapter au cas du vol tactique l'optimisation des vitesses pour chaque phase de vol (segments S1 à S4) et l'optimisation de l'altitude de croisière. Les phases tactiques (ravitaillement, largage, étape tactique) sont conduites à vitesse imposée et à altitude imposée. Ces phases de vol ne sont donc pas soumises elles-mêmes à une optimisation de vitesse et d'altitude. Toutefois, ces phases de vol sont précédées de (et succédées par) des phases conventionnelles (montée, croisière, descente), auxquelles s'appliquent les calculs d'optimisation. Si on considère la succession suivante : décollage, montée, phase de croisière 1, ..., phase tactique, ..., phase de croisière 2, ..., on peut calculer l'altitude optimale pour la phase de croisière 1 basée sur la masse prédite au début de la phase de croisière 1, et l'altitude optimale pour la phase de croisière 2 basée sur la masse prédite au début de la phase de croisière 2, cette dernière masse prédite prenant en compte l'événement tactique survenu lors de la phase tactique, grâce aux caractéristiques précitées conformes à l'invention. Le même principe s'applique pour le calcul des vitesses optimales, avant et après une phase tactique.

Pour des raisons stratégiques, l'équipage peut choisir de ne considérer que certains événements tactiques pour leur prise en compte dans le calcul des prédictions. Pour ce faire :

- il définit les événements tactiques planifiés ; et
- il sélectionne, parmi tous les évènements tactiques planifiés ainsi définis, ceux qui sont à prendre en compte.

Typiquement, pour une mission au cours de laquelle un aéronef doit être ravitaillé, l'équipage peut choisir de ne pas prendre en compte le ravitaillement, afin de considérer le cas où ce ravitaillement ne peut pas avoir lieu. Ainsi, il choisit de ne pas risquer de surestimer la quantité de carburant à bord, au-delà du point de ravitaillement. Toutefois, dans le cas où ce ravitaillement n'est pas pris en compte, les prédictions seront optimistes du point de vue de la masse totale (donc du point de vue des performances de l'aéronef) après le point de ravitaillement. Un autre cas est celui du largage : le cas le plus pénalisant, pour la masse totale prédite (et donc pour les performances), est celui où le largage n'a pas lieu, la masse sans carburant de l'aéronef restant identique après l'évènement.

On peut donc permettre à l'équipage de visualiser les prédictions, en adoptant une stratégie défavorable en termes de performances ou en termes de prédictions de carburant à bord. L'équipage peut également se placer dans des hypothèses intermédiaires en sélectionnant individuellement les évènements à prendre en compte. On peut encore envisager une stratégie définie par défaut, modifiable ou non par l'équipage. On peut également envisager que les prédictions de carburant et les prédictions de masse totale (et par conséquent les performances de l'aéronef) sont basées sur des hypothèses différentes.

Le dispositif 1 conforme à l'invention permet donc à un opérateur :

- de prendre en compte des évènements tactiques d'un vol tactique pour les prédictions et l'optimisation du plan de vol, dès la préparation du vol, avant que ces évènements interviennent ; et
- de sélectionner parmi ces évènements ceux qui doivent être pris en compte, en fonction de la stratégie choisie pour calculer les prédictions, et pour permettre à l'équipage d'envisager tous les cas (suivant que l'on considère qu'un événement aura lieu ou non au cours du vol).

**Revendications**

1. Procédé de génération d'un plan de vol pour un vol tactique d'un aéronef, procédé selon lequel :

   a) on définit des données d'entrée comportant au moins des données de masse et de chargement initiaux de l'aéronef, des données météorologiques, des points de passage (P1 à P5) du plan de vol et au moins un critère d'optimisation ; et

   b) on détermine, à l'aide desdites données d'entrée, en mettant en oeuvre une fonction de prédiction et une fonction d'optimisation, un profil de vol dudit plan de vol (PV) comprenant, pour chaque point de passage (P1 à P5) du plan de vol, une pluralité d'informations prédictives (T1 à T5, V1 à V5, A1 à A5, FOB1 à FOB5) et, entre deux points de passage successifs du plan de vol, des paramètres optimisés,

   **caractérisé en ce que** :

   α) on sélectionne des évènements tactiques dudit vol tactique comportant au moins l'un des événements suivants : un largage en vol, un ravitaillement en vol et une étape tactique comprenant un atterrissage, à prendre en compte ;

   β) on détermine, pour chaque événement tactique ainsi sélectionné :

      - au moins un paramètre qui est modifié par cet évènement tactique à un point de variation particulier pi du plan de vol ; et
      - la variation $\Delta X$ dudit paramètre, correspondant à cette modification à savoir :

         • pour un largage, la diminution de la masse de la charge transportée par l'aéronef ;
         • pour un ravitaillement réalisé par l'aéronef en tant que ravitailleur, la diminution de la masse de carburant à bord de l'aéronef ;

• pour un ravitaillement réalisé par l'aéronef en tant que ravitaillé, l'augmentation de la masse de carburant à bord de l'aéronef ; et

• pour une étape tactique, la variation éventuelle de la masse de la charge transportée, la variation éventuelle de la masse de carburant à bord de l'aéronef et le temps d'arrêt au sol ; et

δ) on utilise à l'étape b), pour déterminer ledit profil de vol (PV), chaque variation de paramètre ΔX ainsi déterminée, prise en compte au point de variation pi correspondant.

**2.** Procédé selon la revendication 1,
**caractérisé en ce qu'**à l'étape α) :

α1) on définit des évènements tactiques planifiés ; et
α2) on sélectionne, parmi tous les évènements tactiques planifiés ainsi définis, ceux qui sont à prendre en compte.

**3.** Procédé selon l'une des revendications 1 et 2,
**caractérisé en ce que** ledit critère d'optimisation définit un rapport entre la consommation de carburant de l'aéronef et le temps de vol.

**4.** Procédé selon l'une quelconque des revendications précédentes,
**caractérisé en ce que** lesdites informations prédictives comportent, pour chaque point de passage (P1 à P5), au moins l'heure de passage (T1 à T5), la vitesse de passage (V1 à V5), l'altitude de passage (A1 à A5) et la masse de carburant (FOB1 à FOB5) restant à bord de l'aéronef.

**5.** Procédé selon l'une quelconque des revendications précédentes, **caractérisé en ce que** lesdits paramètres optimisés comportent au moins la vitesse optimale et, le cas échéant, l'altitude de croisière optimale, entre deux points de passage successifs.

**6.** Procédé selon l'une quelconque des revendications précédentes, **caractérisé en ce que** ledit paramètre qui est modifié, correspond à l'un des paramètres suivants :

- la masse de la charge transportée par l'aéronef ;
- la masse de carburant à bord de l'aéronef ;
- la masse à vide de l'aéronef ;
- l'heure de passage ;
- la position du centre de gravité de l'aéronef ; et
- la configuration aérodynamique de l'aéronef.

**7.** Procédé selon l'une quelconque des revendications précédentes, **caractérisé en ce que** ledit point de variation particulier correspond :

- au point de fin de largage, pour un largage ;
- au point de fin de ravitaillement, pour un ravitaillement réalisé par l'aéronef en tant que ravitailleur ;
- au point de début de ravitaillement, pour un ravitaillement réalisé par l'aéronef en tant que ravitaillé ; et
- au point de début de la piste d'atterrissage, pour une étape tactique.

**8.** Procédé selon l'une quelconque des revendications précédentes, **caractérisé en ce qu'**à l'étape δ), pour au moins un paramètre, on utilise directement la variation dudit paramètre.

**9.** Procédé selon l'une quelconque des revendications précédentes, **caractérisé en ce qu'**à l'étape δ), pour au moins un paramètre, on utilise une valeur estimée dudit paramètre à la fin de l'évènement tactique correspondant, qui tient compte de la variation dudit paramètre.

**10.** Dispositif de génération d'un plan de vol pour un vol tactique d'un aéronef, ledit dispositif (1) comportant :

- des premiers moyens d'entrée (2) permettant à un opérateur d'entrer des données d'entrée comportant au moins des données de masse et de chargement initiaux de l'aéronef, des données météorologiques, des points de passage (P1 à P5) du plan de vol et au moins un critère d'optimisation ;

- une unité centrale (3) pour déterminer, à l'aide desdites données d'entrée, en mettant en oeuvre une fonction de prédiction et une fonction d'optimisation, un profil de vol (PV) dudit plan de vol comprenant, pour chaque point de passage (P1 à P5) du plan de vol, une pluralité d'informations prédictives (T1 à T5, V1 à V5, A1 à A5, FOB1 à FOB5) et, entre deux points de passage successifs du plan de vol, des paramètres optimisés ; et
- des moyens d'affichage (5) pour présenter, sur un écran de visualisation (7), le profil de vol (PV) déterminé par ladite unité centrale (3),

**caractérisé en ce que** :

- ledit dispositif (1) comporte, de plus, des seconds moyens d'entrée (8) permettant à un opérateur d'entrer, pour chaque événement tactique du vol tactique comportant au moins l'un des évènements suivants : un largage en vol, un ravitaillement en vol et une étape tactique comprenant un atterrissage, la variation ΔX d'au moins un paramètre qui est modifié par cet événement tactique à un point de variation particulier pi du plan de vol, à savoir :

  • pour un largage, la diminution de la masse de la charge transportée par l'aéronef ;
  • pour un ravitaillement réalisé par l'aéronef en tant que ravitailleur, la diminution de la masse de carburant à bord de l'aéronef ;
  • pour un ravitaillement réalisé par l'aéronef en tant que ravitaillé, l'augmentation de la masse de carburant à bord de l'aéronef ; et
  • pour une étape tactique, la variation éventuelle de la masse de la charge transportée, la variation éventuelle de la masse de carburant à bord de l'aéronef et le temps d'arrêt au sol ; et

- ladite unité centrale (3) utilise, pour déterminer ledit profil de vol (PV), chaque variation de paramètre ΔX qui a été entrée à l'aide desdits seconds moyens d'entrée (8) et qui est prise en compte au point de variation pi correspondant.

**11.** Dispositif selon la revendication 10,
**caractérisé en ce que** :

- ledit dispositif (1) comporte, de plus, au moins une base de données (10) contenant des variations de paramètre associées à des évènements tactiques ;
- lesdits seconds moyens d'entrée (8) permettent à un opérateur d'entrer des évènements tactiques ; et
- ladite unité centrale (3) utilise automatiquement les variations de paramètre contenues dans ladite base de données (10) et associées à un événement tactique particulier, lorsque l'opérateur entre cet évènement tactique à l'aide desdits seconds moyens d'entrée (8), pour déterminer ledit profil de vol (PV).

**12.** Aéronef,
**caractérisé en ce qu'**il comporte un dispositif (1) susceptible de mettre en oeuvre le procédé spécifié sous l'une quelconque des revendications 1 à 9.

**13.** Aéronef,
**caractérisé en ce qu'**il comporte un dispositif (1) tel que celui spécifié sous l'une des revendications 10 et 11.

## Claims

**1.** Method of generating a flight plan for a tactical flight of an aircraft, according to which method:

a) input data are defined comprising at least data of initial weight and initial loading of the aircraft, meteorological data, points of transit (P1 to P5) of the flight plan and at least one optimization criterion; and
b) a flight profile of said flight plan (PV) comprising, for each point of transit (P1 to P5) of the flight plan, a plurality of predictive information (T1 to T5, V1 to V5, A1 to A5, FOB1 to FOB5) and, between two successive points of transit of the flight plan, optimized parameters is determined, with the aid of said input data, by implementing a prediction function and an optimization function,

**characterized in that**:

α) tactical events of said tactical flight comprising at least one of the following events: an in-flight drop, and in-flight refuelling and a tactical step comprising a landing, to be taken into account, are selected;

β) for each tactical event thus selected are determined;

- at least one parameter which is modified by this tactical event at a particular point of variation pi of the flight plan; and
- the variation ΔX of said parameter, corresponding to this modification namely:

  • for a drop, the decrease in the weight of the load transported by the aircraft;
  • for a refuelling carried out by the aircraft in the guise of tanker, the decrease in the weight of fuel on board the aircraft;
  • for a refuelling carried out by the aircraft in the guise of refuelled aircraft, the increase in the weight of fuel on board the aircraft; and
  • for a tactical step, the possible variation of the weight of the load transported, the possible variation of the weight of fuel on board the aircraft and the stoppage time on the ground; and

δ) each parameter variation ΔX thus determined, taken into account at the corresponding point of variation pi, is used in step b) to determine said flight profile (PV).

2. Method according to Claim 1,
   **characterized in that** in step α) :

   α1) scheduled tactical events are defined; and
   α2) out of all the scheduled tactical events thus defined, those which are to be taken into account are selected.

3. Method according to either of Claims 1 and 2,
   **characterized in that** said optimization criterion defines a ratio of the fuel consumption of the aircraft to the flight time.

4. Method according to any one of the preceding claims,
   **characterized in that** said predictive information comprises, for each point of transit (P1 to P5), at least the time of transit (T1 to T5), the speed of transit (V1 to V5), the altitude of transit (A1 to A5) and the weight of fuel (FOB1 to FOB5) remaining on board the aircraft.

5. Method according to any one of the preceding claims,
   **characterized in that** said optimized parameters comprise at least the optimal speed and, as appropriate, the optimal cruising altitude, between two successive points of transit.

6. Method according to any one of the preceding claims,
   **characterized in that** said parameter which is modified corresponds to one of the following parameters:

   - the weight of the load transported by the aircraft;
   - the weight of fuel on board the aircraft;
   - the empty weight of the aircraft;
   - the time of transit;
   - the position of the centre of gravity of the aircraft; and
   - the aerodynamic configuration of the aircraft.

7. Method according to any one of the preceding claims,
   **characterized in that** said particular point of variation corresponds:

   - to the end of drop point, for a drop;
   - to the end of refuelling point, for a refuelling carried out by the aircraft in the guise of tanker;
   - to the start of refuelling point, for a refuelling carried out by the aircraft in the guise of refuelled aircraft; and
   - to the start point of the landing strip, for a tactical step.

8. Method according to any one of the preceding claims,
   **characterized in that** in step δ), for at least one parameter, direct use is made of the variation of said parameter.

**9.** Method according to any one of the preceding claims,
**characterized in that** in step δ), for at least one parameter, use is made of an estimated value of said parameter at the end of the corresponding tactical event, which takes account of the variation of said parameter.

**10.** Device for generating a flight plan for a tactical flight of an aircraft, said device (1) comprising:

- first input means (2) allowing an operator to enter input data comprising at least data of initial weight and initial loading of the aircraft, meteorological data, points of transit (P1 to P5) of the flight plan and at least one optimization criterion;
- a central unit (3) for determining, with the aid of said input data, by implementing a prediction function and an optimization function, a flight profile (PV) of said flight plan comprising, for each point of transit (P1 to P5) of the flight plan, a plurality of predictive information (T1 to T5, V1 to V5, A1 to A5, FOB1 to FOB5) and, between two successive points of transit of the flight plan, optimized parameters; and
- display means (5) for presenting, on a display screen (7), the flight profile (PV) determined by said central unit (3),

**characterized in that**:

- said device (1) comprises, furthermore, second input means (8) allowing an operator to enter, for each tactical event of the tactical flight comprising at least one of the following events: an in-flight drop, an in-flight refuelling and a tactical step comprising a landing, the variation ΔX of at least one parameter which is modified by this tactical event at a particular point of variation pi of the flight plan, namely;

   • for a drop, the decrease in the weight of the load transported by the aircraft;
   • for a refuelling carried out by the aircraft in the guise of tanker, the decrease in the weight of fuel on board the aircraft;
   • for a refuelling carried out by the aircraft in the guise of refuelled aircraft, the increase in the weight of fuel on board the aircraft; and
   • for a tactical step, the possible variation of the weight of the load transported, the possible variation of the weight of fuel on board the aircraft and the stoppage time on the ground; and

- said central unit (3) uses, to determine said flight profile (PV), each parameter variation ΔX which has been entered with the aid of said second input means (8) and which is taken into account at the corresponding point of variation pi.

**11.** Device according to Claim 10,
**characterized in that**:

- said device (1) furthermore comprises at least one database (10) containing parameter variations associated with tactical events;
- said second input means (8) allow an operator to enter tactical events; and
- said central unit (3) automatically uses the parameter variations contained in said database (10) and associated with a particular tactical event, when the operator enters this tactical event with the aid of said second input means (8), to determine said flight profile (PV).

**12.** Aircraft,
**characterized in that** it comprises a device (1) able to implement the method specified under any one of Claims 1 to 9.

**13.** Aircraft,
**characterized in that** it comprises a device (1) such as that specified under either of Claims 10 and 11.

**Patentansprüche**

**1.** Verfahren zur Erzeugung eines Flugplanes für einen taktischen Flug eines Flugzeuges in welchem:

a) Eingabedaten gebildet werden, die wenigstens Anfangsdaten über das Gewicht und die Ladung des Flugzeugs, meteorologische Daten, Überflugpunkte (P1 bis P5) des Flugplans und wenigstens ein Optimierungskriterium umfassen; und

b) mit Hilfe der Eingebedaten unter Durchführung einer Vorhersagefunktion und einer Optimierungsfunktion ein Flugprofil des Flugplanes (PV) bestimmt wird, das für jeden Überflugpunkt (P1 bis P5) des Flugplanes eine Mehrzahl von Vorhersageinformationen (T1 bis T5, V1 bis V5, A1 bis A5, FOB1 bis FOB5) und zwischen zwei aufeinanderfolgenden Überflugpunkten des Flugplanes optimierte Parameter umfasst,

**dadurch gekennzeichnet, dass**:

α) taktische Ereignisse des taktischen Fluges ausgewählt werden, die wenigstens eines der folgenden zu berücksichtigenden Ereignisse umfassen: einen Abwurf im Flug, eine Betankung im Flug und ein taktisches Etappenziel mit einer Landung;
β) für jedes so ausgewählte taktische Ereignis bestimmt wird:

- wenigstens ein Parameter, der durch dieses taktische Ereignis an einem speziellem Variationspunkt pi des Flugplanes modifiziert wird; und
- die Variation $\Delta X$ des Parameters, die mit dieser Modifikation korrespondiert, nämlich:

• für einen Abwurf, die Verminderung des Gewichts der durch das Flugzeug transportierten Ladung;
• für eine durch das Flugzeug als Tankflugzeug ausgeführte Betankung, die Verminderung des an Bord befindlichen Treibstoffgewichts des Flugzeugs;
• für eine durch das Flugzeug als zu betankendes Flugzeug ausgeführte Betankung, die Zunahme des an Bord befindlichen Treibstoffgewichts des Flugzeugs; und
• für eine taktisches Etappenziel, die mögliche Variation des Gewichts der transportierten Ladung, die mögliche Variation des an Bord des Flugzeugs befindlichen Treibstoffgewichts und die Wartezeit am Boden; und

δ) am Schritt b, um das Flugprofil (PV) zu bestimmen, jede so bestimmte Variation des Parameters $\Delta X$, die am entsprechenden Variationspunkt pi berücksichtigt wird, verwendet wird.

2. Verfahren nach Anspruch 1,
   **dadurch gekennzeichnet,**
   **dass** am Schritt α):

   α1) geplante taktische Ereignisse definiert werden; und
   α2) aus allen so definierten, geplanten taktischen Ereignissen diejenigen ausgewählt werden, die berücksichtigt werden sollen.

3. Verfahren nach einem der Ansprüche 1 und 2,
   **dadurch gekennzeichnet,**
   **dass** das Optimierungskriterium einen Bezug zwischen dem Treibstoffverbrauch des Flugzeugs und der Flugzeit definiert.

4. Verfahren nach einem der vorstehenden Ansprüche,
   **dadurch gekennzeichnet,**
   **dass** die Vorhersageinformationen für jeden Überflugpunkt (P1 bis P5) wenigstens die Überflugzeit (T1 bis T5), die Überfluggeschwindigkeit (V1 bis V5), die Überflughöhe (A1 bis A5) und das noch an Bord des Flugzeugs befindliche Treibstoffgewicht (FOB1 bis FOB5) umfassen.

5. Verfahren nach einem der vorstehenden Ansprüche,
   **dadurch gekennzeichnet,**
   **dass** die optimierten Parameter wenigstens die optimale Geschwindigkeit und gegebenenfalls die optimale Reisehöhe zwischen zwei aufeinanderfolgenden Überflugpunkten umfassen.

6. Verfahren nach einem der vorstehenden Ansprüche,
   **dadurch gekennzeichnet,**
   **dass** der Parameter, der modifiziert wird, einem der folgenden Parameter entspricht:

   - Gewicht der durch das Flugzeug transportierten Ladung;
   - an Bord des Flugzeugs befindliches Treibstoffgewicht;

- Leergewicht des Flugzeugs;
- Überflugzeit;
- Position des Schwerpunktes des Flugzeugs; und
- die aerodynamische Konfiguration des Flugzeugs.

7. Verfahren nach einem der vorstehenden Ansprüche,
**dadurch gekennzeichnet,**
**dass** der spezielle Variationspunkt entspricht:

- dem Endpunkt des Abwurfs, für einen Abwurf;
- dem Endpunkt der Betankung, für eine durch das Flugzeug als Betankungsflugzeug ausgeführte Betankung;
- dem Anfangspunkt der Betankung, für eine durch das Flugzeug als zu betankendes Flugzeug ausgeführte Betankung;
- dem Anfangspunkt der Landepiste, für ein taktisches Etappenziel.

8. Verfahren nach einem der vorstehenden Ansprüche,
**dadurch gekennzeichnet,**
**dass** am Schritt δ) für wenigstens einen Parameter direkt die Variation des Parameters verwendet wird.

9. Verfahren nach einem der vorstehenden Ansprüche,
**dadurch gekennzeichnet,**
**dass** am Schritt δ) für wenigstens einen Parameter ein geschätzter Wert des Parameters am Ende des entsprechenden taktischen Ereignisses verwendet wird, der die Variation des Parameters berücksichtigt.

10. Vorrichtung zur Erzeugung eines Flugplans für einen taktischen Flug eines Flugzeugs, wobei die Vorrichtung (1) umfasst:

- erste Eingabemittel (2), die einem Benutzer ermöglichen, Eingangsdaten einzugeben, die wenigstens Anfangsdaten über das Gewicht und die Ladung des Flugzeugs, meteorologische Daten, Überflugpunkte (P1 bis P5) des Flugplanes und wenigstens ein Optimierungskriterium umfassen;
- eine Zentraleinheit (3), um mit Hilfe der Eingangsdaten unter Durchführung einer Vorhersagefunktion und einer Optimierungsfunktion ein Flugprofil (PV) des Flugplanes zu bestimmen, das für jeden Überflugpunkt (P1 bis P5) des Flugplanes eine Mehrzahl von Vorhersageinformationen (T1 bis T5, V1 bis V5, A1 bis A5, FOB1 bis FOB5) und zwischen zwei aufeinanderfolgenden Überflugpunkten des Flugplanes optimierte Parameter umfasst; und
- Anzeigemittel (5), um auf einen Visualisierungsschirm (7) das durch die Zentraleinheit (3) bestimmte Flugprofil (PV) darzustellen,

**dadurch gekennzeichnet, dass**

- die Vorrichtung (1) ferner zweite Eingabemittel (8) umfasst, die einem Benutzer ermöglichen, für jedes taktische Ereignis des taktischen Fluges, das wenigstens eines der folgenden Ereignisse umfasst: einen Abwurf im Flug, eine Betankung im Flug und ein taktisches Etappenziel mit einer Landung, die Variation ΔX von wenigstens einem Parameter einzugeben, der durch dieses taktische Ereignis an einem speziellen Variationspunkt pi des Flugplanes modifiziert wird, nämlich:

  • für einen Abwurf, die Verminderung des Gewichts der durch das Flugzeug transportierten Ladung;
  • für eine durch das Flugzeug als Betankungsflugzeug ausgeführte Betankung, die Verminderung der an Bord des Flugzeugs befindlichen Treibstoffmenge;
  • für eine durch das Flugzeug als zu betankendes Flugzeug ausgeführte Betankung, die Zunahme des an Bord befindlichen Treibstoffgewichts;
  • für ein taktisches Etappenziel, die evtl. Variation des Gewichts der transportierten Ladung, die evtl. Variation des Gewichts des an Bord des Flugzeugs befindlichen Treibstoffs und die Wartezeiten am Boden; und

- die Zentraleinheit (3) zum Bestimmen des Flugprofils (PV) jede Variation des Parameters ΔX verwendet, die mit Hilfe der zweiten Eingabemittel (8) eingegeben wurde und die am entsprechenden Variationspunkt pi berücksichtigt wird.

**11.** Vorrichtung nach Anspruch 10, **dadurch gekennzeichnet, dass**:

- die Vorrichtung (1) ferner wenigstens eine Datenbank (10) umfasst, die Variationen des Parameters enthält, die den taktischen Ereignissen zugeordnet sind;
- die zweiten Eingabemittel (8) einem Benutzer ermöglichen, die taktischen Ereignisse einzugeben; und
- die Zentraleinheit (3) automatisch die Variationen des Parameters verwendet, die in der Datenbank (10) enthalten sind und einem speziellen taktischen Ereignis zugeordnet sind, wenn der Benutzer dieses taktische Ereignis mit Hilfe der zweiten Eingabemittel (8) eingibt, um das Flugprofil (PV) zu bestimmen.

**12.** Flugzeug, **dadurch gekennzeichnet, dass** dieses eine Vorrichtung (1) umfasst, die dazu geeignet ist, dass nach einem der Ansprüche 1 bis 9 angegebene Verfahren auszuführen.

**13.** Flugzeug, **dadurch gekennzeichnet, dass** dieses eine Vorrichtung (1) umfasst, wie diejenige, die unter einem der Ansprüche 10 und 11 angegeben ist.

Fig. 1

EP 1 496 461 B1

EP 1 496 461 B1

Fig. 2

Z1

Tpi : 08H12
FOBpi : 05.3T
PWpi : 23.0T

△ Tpi    00H25  —14

Z2 → △ FOBpi    +07.5T  —15

△ PWpi    -02.1T  —16

TpiF : 08H37
FOBpiF : 12.8T
PWpiF : 20.9T

Z3

13

Fig. 3